# EUROPEAN PATENT APPLICATION

(11) **EP 0 895 406 A2**
(43) Date of publication of application: **03.02.1999**
(21) Application number: 98305974.2
(22) Date of filing: 27.07.1998
(51) Int. Cl.: H04N 1/32

(54) **Communication apparatus and method of selecting recording paper container of same**

(30) Priority: 28.07.1997 JP 201864/97
(71) Applicant: SHARP KABUSHIKI KAISHA, Osaka (JP)
(72) Inventor: Ishikawa, Nobuyuki, Gose-shi, Nara (JP)
(74) Representative: Brown, Kenneth Richard

(57) **Abstract**

An object of the invention is that a terminal at the transmitting end can easily designate an active unit of a terminal at the receiving end, and that the terminal at the receiving end can easily activate the active unit thus designated. A CPU (2) compares an object ringing pattern (RA) sampled at the time of outputting a ringing tone with a plurality of predetermined reference ringing patterns (RB), and controls a print controller (12) in such a manner as to select and activate a recording paper cassette corresponding to a reference ringing pattern (RB) matching the sampled object ringing pattern (RA) with reference to a setting table included in a RAM (4). Consequently, the information-transmitting end of information grasps correspondences between the ringing patterns and the recording paper cassettes in the facsimile apparatus (1) at the information-receiving end of information. The transmitting terminal can thus select a ringing pattern for communication while at the same time easily designating a recording paper cassette of the facsimile apparatus (1), which can easily activate the designated recording paper cassette.

## Description

### BACKGROUND OF THE INVENTION

### 1. Field of the Invention

The present invention relates to a communication apparatus such as a facsimile apparatus connected to a line to which a plurality of telephone numbers having different ringing patterns are assigned and a method of selecting a recording paper container of the same.

### 2. Description of the Related Art

Generally, a facsimile apparatus includes a recording paper cassette containing recording paper, on which communication information is printed. In the case where a facsimile apparatus has a plurality of recording paper cassettes, the recording paper encased in a main cassette is usually used, and upon consumption of the recording paper encased in the main cassette, the recording paper encased in a sub cassette is used. Also, these cassettes each can encase recording papers of different qualities or sizes and appropriately selected to print and record the communication information according to a specific purpose.

A communication apparatus like this facsimile apparatus is connectable to a public telephone line under a distinctive ringing service agreement. In this service, a plurality of telephone numbers of different ringing patterns are assigned to one line.

In the conventional facsimile apparatus including a plurality of recording paper cassettes encasing different types of recording paper, the type of the recording paper, i.e. the recording cassette can be designated only by a terminal unit at the receiving end of information. However, there may be cases that it is to be wised that the terminal at the transmitting end designates the type of recording paper. For example, the communication information to be preserved and photographic information are preferably printed and recorded using the coating paper. However, the conventional apparatus, though comprising a local recording paper cassette selector for selecting the recording paper cassette of the local apparatus, lacks a remote recording paper cassette selector for selecting the recording paper cassette of the terminal unit of the other party. Therefore, the terminal at the transmitting end of information cannot designate the recording paper cassette of the terminal at the receiving end of information.

On the other hand, Japanese Unexamined Patent Publication JP-A 61-67364(1986) discloses a technique of designating the recording paper of the receiving terminal by means of the transmitting terminal without changing a protocol for facsimile transmission. Specifically, the transmitting terminal transmits a push-button (PB) signal for designating the recording paper, and the receiving terminal detects and decodes the PB signal thereby to select the designated recording paper. The technique disclosed in the above-mentioned publication has no relation to whether or not a communication apparatus is connected to the public telephone line under the distinctive ringing service agreement described above, and therefore requires the transmit/receive operation of the PB signal exclusively used for designating the recording paper. The operation for designating the recording paper is relatively complicated and troublesome for the user to perform.

Japanese Unexamined Patent Publication JP-A 7-162486 (1995) discloses a telephone apparatus connected to a single telephone line and to which different ringing patterns are provided corresponding to a plurality of telephone numbers. In the apparatus, ringing patterns are pre-stored for each of the telephone numbers, and the telephone numbers and ringing tones are pre-stored in one-to-one correspondence. A ringing pattern which has been actually provided is compared with the preregistered ringing patterns to determine at which of the telephone numbers the call is being made and to read and produce the ringing tone corresponding to the determined telephone number. The technique of the publication relates to a terminal at the receiving end, and does not make it possible to designate the recording paper cassette of a terminal at receiving end by means of a terminal at the transmitting end.

### SUMMARY OF THE INVENTION

An object of the invention is to provide a communication apparatus in which an active unit of a receiving terminal can be easily designated by a transmitting terminal and in which the active unit thus designated can be easily activated, and a method of selecting a recording paper container of such communication apparatus.

The invention provides a communication apparatus connected to a line to which a plurality of telephone numbers are assigned, for outputting ringing patterns in one-to-one correspondence to the telephone numbers, the communication apparatus comprising:
memory means for storing a plurality of predetermined reference ringing patterns and a plurality of active units corresponding thereto;
sampling means for sampling an object ringing pattern outputted at the time of ringing tone;
comparator means for comparing an object ringing pattern sampled by the sampling means with a plurality of reference ringing patterns stored in the memory means; and
selection means for selectively activating an active unit corresponding to the reference ringing pattern matching the object ringing pattern sampled based on the result of comparison by the comparator means.

According to the invention, the object ringing pattern sampled at the time of outputting ringing tone is compared with a plurality of predetermined reference ringing patterns, and an active unit corresponding to the reference ringing pattern matching the object ringing pattern sampled is selectively activated. Therefore, in the case where a terminal at the information-transmitting end can grasp one-to-one correspondences between the ringing patterns and the active units in the communication unit at the information-receiving end, the active unit of the communication unit at the receiving terminal can be easily designated by selecting the ringing pattern at the transmitting terminal. Also, communication between the communication units at the transmitting and receiving ends is made possible by executing a predetermined communication procedure after producing an object ringing tone, so that a designated active unit can be easily activated without a specific select operation.

The invention is characterized in that a plurality of the active units are a plurality of recording paper containers for individually encasing and feeding different types of recording paper for printing and recording communication information.

According to the invention, the active units are recording paper containers, and the recording paper container corresponding to the reference ringing pattern matching the object ringing pattern sampled is selectively activated. In the case where the terminal at the information-transmitting end selects a ringing pattern, a recording paper container of the communication unit at the receiving end of information can be easily designated. Also, the communication information can be easily printed and outputted by the receiving communication unit using the recording paper encased in the designated recording paper container.

The invention provides a method for selecting from among a plurality of recording paper containers for individually encasing and feeding a plurality of kinds of recording paper for printing and recording communication information, in the communication apparatus connected to one line to which a plurality of telephone numbers are assigned and producing ringing patterns in one-to-one correspondence with the telephone numbers, the method for selecting the recording paper container comprising the steps of:
sampling an object ringing pattern outputted at the time of ringing;
comparing the sampled object ringing pattern with a plurality of predetermined reference ringing patterns which are stored in one-to-one correspondence with a plurality of recording paper containers; and
activating the recording paper container corresponding to the reference ringing pattern which matches the sampled object ringing pattern.

According to the method for selecting the recording paper container as described above, the recording paper container of the communication apparatus at the receiving end can be easily designated by means of the terminal at the transmitting end, and the designated recording paper container can be easily activated without performing a specific select operation.

### BRIEF DESCRIPTION OF THE DRAWINGS

Other and further objects, features, and advantages of the invention will be more explicit from the following detailed description taken with reference to the drawings wherein:
Fig. 1 is a block diagram showing an electrical configuration of a facsimile apparatus 1 according to an embodiment of the invention;
Fig. 2 is a flowchart for explaining the operation of sampling an object ringing pattern RA for the facsimile apparatus 1;
Fig. 3 is a diagram showing a sampling buffer 21 included in a RAM 4 used for sampling an object ringing pattern RA;
Fig. 4 is a diagram showing a ringing pattern table 25 included in a ROM 3;
Fig. 5 is a diagram showing a setting table 28 included in the RAM 4; and
Fig. 6 is a flowchart for explaining the operation of selecting a recording paper cassette of the facsimile apparatus 1 described above.

### DETAILED DESCRIPTION OF THE PREFERRED EMBODIMENTS

Now referring to the drawings, preferred embodiments of the invention are described below.

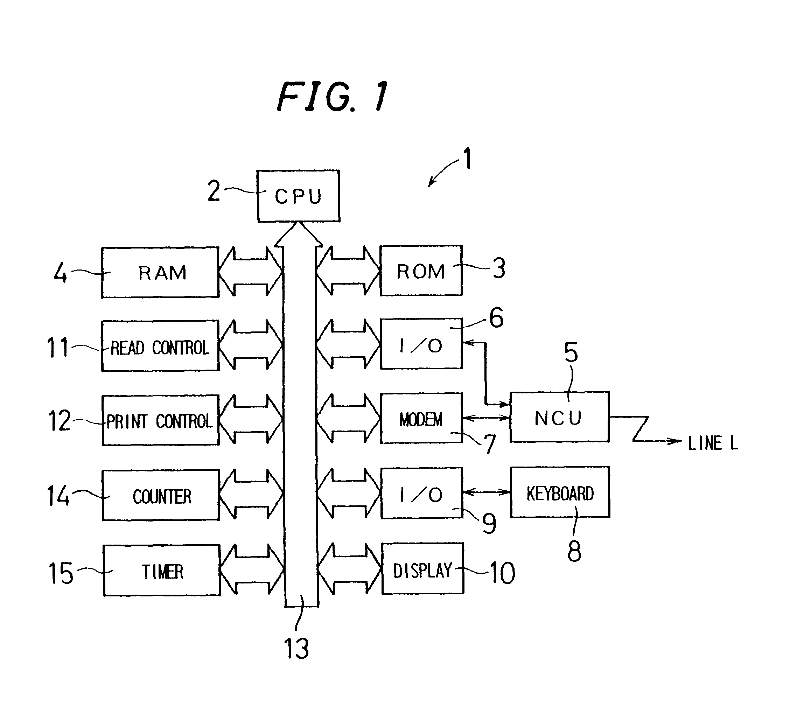

Fig. 1 is a block diagram showing an electrical configuration of a facsimile apparatus 1 according to an embodiment of the invention. The facsimile apparatus 1 is connected to a public telephone line L under a distinctive ringing service contract. A plurality of telephone numbers of different ringing patterns are assigned to the line L. Also, telephone communication or facsimile communication can be selectively received through the single line L.

A CPU (central processing unit) 2 controls the overall operation of the apparatus. The CPU 2 is connected to a ROM (read-only memory) 3, a RAM (random access memory) 4, I/O (input/output) units 6, 9, a modem 7, a display unit 10, a read controller 11, a print controller 12, a counter 14 and a timer 15 through a bus line 13.

The ROM 3 stores an operation program for the facsimile apparatus 1, and a plurality of predetermined reference ringing patterns RB. The RAM 4 stores an object ringing pattern RA sampled at the time of outputting a ringing tone. The RAM 4 also stores one-to-one correspondences between a plurality of the reference ringing patterns RB and a plurality of recording paper cassettes, i.e. a plurality of types of recording paper.

The modem 7 is connected to the line L through a NCU (network control unit) 5 for controlling the communication operation. A keyboard 8 comprising a plurality of keys such as ten-keys for enabling the operator to perform various manipulations is connected to the I/O unit 9. The display unit 10 displays data for checking various operating conditions. The read controller 11, which is used for transmitting image data to the terminal of the other party, controls the operation for reading the image data from a predetermined original. The I/O unit 6 is connected with the NCU 5 for controlling the switching operation of a CML relay or the like of the NCU 5.

The print controller 12 controls the printing operation for printing the image data or the like sent from the terminal of the other party. Specifically, the print controller 12 selectively activates a plurality of recording paper cassettes under the control of the CPU 2. A plurality of types of recording paper are individually stored in the recording paper cassettes. An arbitrary type of the recording paper can therefore be designated and the designated type of recording paper can be fed by selecting a recording paper cassette. A plurality of types of recording paper include the coating paper, the bond paper, the copying paper, the backing paper and the recycled paper of relatively high quality.

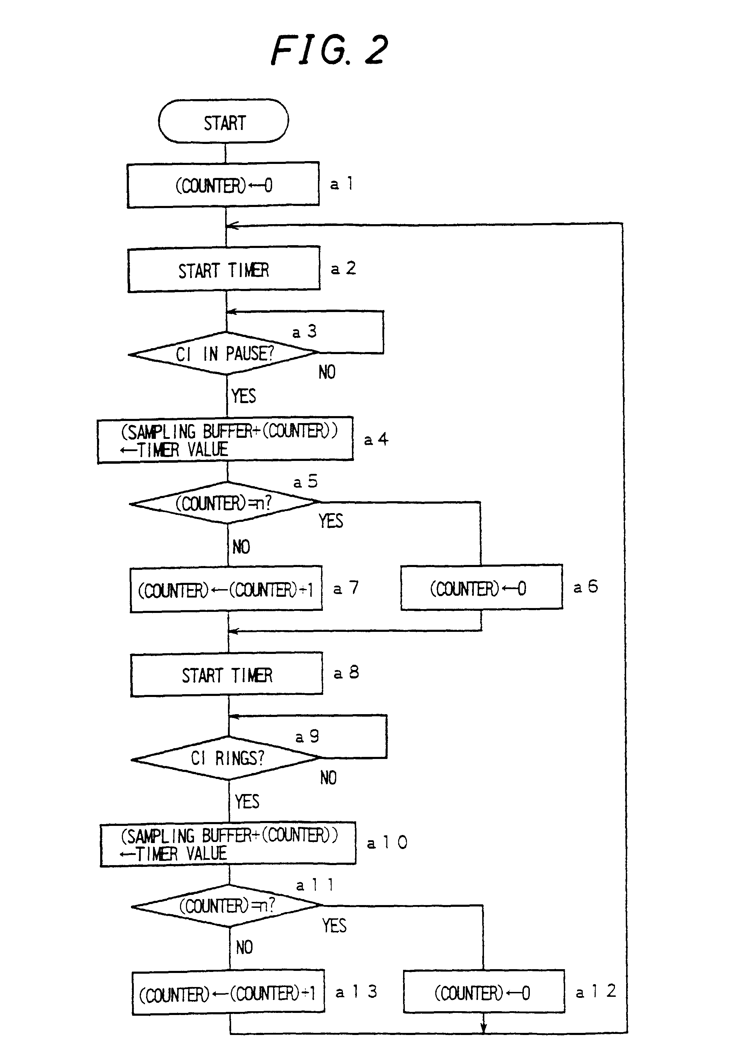

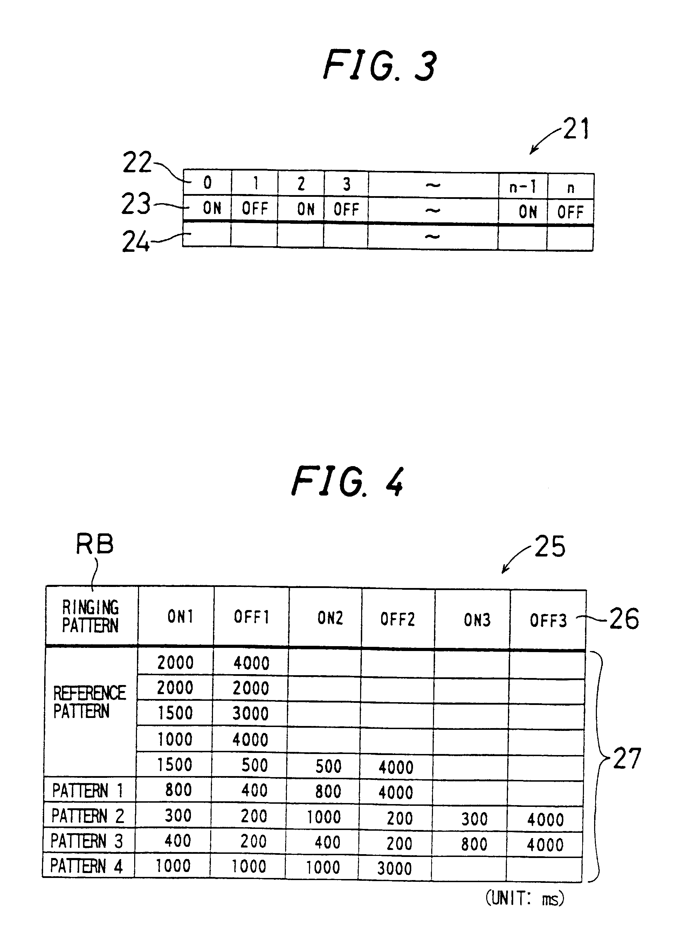

Fig. 2 is a flowchart for explaining the sampling operation of the object ringing pattern RA for the facsimile apparatus 1. Fig. 3 is a diagram showing a sampling buffer 21 included in the RAM 4 for sampling the object ringing pattern RA. The sampling buffer 21 stores a ringing state 23 and a time 24 of a CI (call) signal for each of numbers 22. The numbers 22 are natural numbers 0 to n (n: even number). The ringing state 23 of the CI signal is set sequentially from 0 by repeating the ringing (ON), pause (OFF), the ringing (ON) and so on, in that order.

At step al, a counter 14 is set to 0 (zero). First, in order to count the ringing time of the CI signal, at step a2 a timer 15 starts to count. When the CI signal takes a pause at step a3, the process proceeds to step a4. At step a4, the time 24 counted by the timer 15 is stored in correspondence with the number 22 of the sampling buffer 21 equivalent to the count on the counter 14. At step a5, it is judged whether the count on the counter 14 is an even number or not. In the case where the count is an even number, the process proceeds to step a6 and further to step a8 with the count 0. In the case where the count is not an even number, the process proceeds to step a7 for adding 1 to the count, followed by proceeding to step a8.

Then, for measuring the pause time of the CI signal, the timer 15 starts counting at step a8. When the CI signal sounds at step a9, the process proceeds to step a10. At step a10, the time 24 is stored, which has been counted by the timer 15 corresponding to the number 22 of the sampling buffer 21 equivalent to the count on the counter 14. At step all, it is judged whether the count on the counter 14 is an even number or not. In the case where the count is an even number, the process proceeds to step a12 and returns to step a2 with the count 0. In the case where the count is not an even number, on the other hand, the process proceeds to step a13 for adding 1 to the count, followed by returning to step a2.

In this way, the object ringing pattern RA can be sampled at the time of outputting a ringing tone. Now, explanation will be made about the operation of activating the recording paper cassette selectively by comparing the sampled object ringing pattern RA with a plurality of the reference ringing patterns RB stored in the ROM 3.

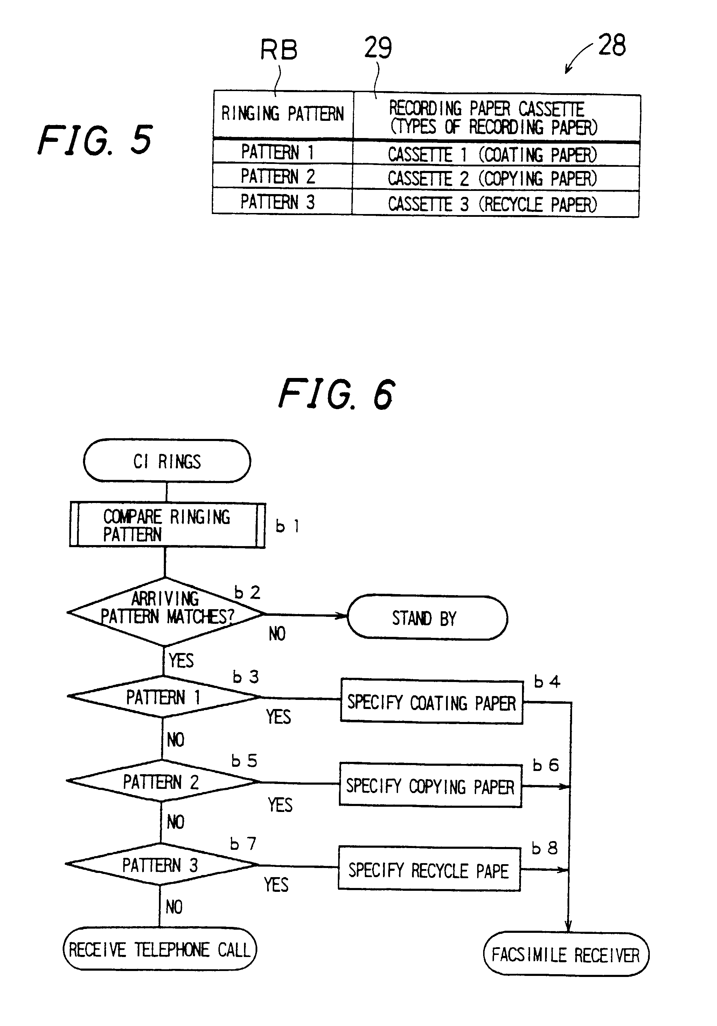

Fig. 4 is a diagram showing a ringing pattern table 25 included in the ROM 3. The table 25 stores the ringing state 26 of the CI signal and the corresponding time 27 for each of the reference ringing patterns RB. Fig. 5 is a diagram showing a setting table 28 included in the RAM 4. The setting table 28 stores one-to-one correspondences between the reference ringing patterns RB and the corresponding recording paper cassettes 29, i.e. the corresponding types of recording paper.

Fig. 6 is a flowchart for explaining the operation of selecting the recording paper cassette. At step bl, the CPU 2 compares the object ringing pattern RA sampled and stored in the ringing pattern buffer 21 with a plurality of reference ringing patterns RB stored in the ringing pattern table 25. At step b2, the CPU 2 judges whether the ringing patterns RA and RB match each other. In the case where they match each other, the process proceeds to step b3. Otherwise, the CPU 2 stands by for receipt of a ringing tone.

At step b3, the CPU 2 judges whether the object ringing pattern RA matches the first reference ringing pattern RB. In the case where the judgment is affirmative, the process proceeds to step b4, where the print controller 12 is controlled in such a manner that the first recording paper cassette corresponding to the first ringing pattern RB is selected and activated with reference to the setting table 28, thus carrying out the facsimile receiving operation. As a result, the communication information is recorded on the coating paper. In the case where the judgment is negative, on the other hand, the process proceeds to step b5.

At step b5, the CPU 2 judges whether the object ringing pattern RA matches the second reference ringing pattern RB. In the case where the judgment is affirmative, the process proceeds to step b6, where the print controller 12 is controlled in such a manner that the second recording paper cassette corresponding to the second ringing pattern RB is selected and activated with reference to the setting table 28, thereby carrying out the facsimile receiving operation. As a result, the communication information is recorded on the copying paper. In the case where the judgment is negative, on the other hand, the process proceeds to step b7.

At step b7, the CPU 2 judges whether the object ringing pattern RA matches the third reference ringing pattern RB. In the case where the judgment is affirmative, the process proceeds to step b8, where the print controller 12 is controlled in such a manner that the third recording paper cassette corresponding to the third ringing pattern RB is selected and activated with reference to the setting table 28, thereby carrying out the facsimile receiving operation. As a result, the communication information is recorded on the recycle paper. In the case where the judgment is negative, on the other hand, the telephone receiving process is executed.

In this way, the object ringing pattern RA sampled at the time of outputting a ringing tone is compared with a plurality of the predetermined reference ringing patterns RB, thereby selectively activating the recording paper cassette corresponding to the reference ringing pattern RB matching the sampled object ringing pattern RA. Consequently, a terminal at the information-transmitting end grasps one-to-one correspondences between the ringing patterns and the recording paper cassettes of the facsimile apparatus 1 constituting the information-receiving end. Thus, the transmitting terminal can select a ringing pattern for communication while at the same time easily designating the recording paper cassette of the facsimile apparatus at the receiving end without a specific select operation. The facsimile apparatus 1 at the receiving end, on the other hand, can easily print, record and output the communication information using the recording paper encased in the designated recording paper cassette.

Although this embodiment was explained taking a recording paper cassette as an example of active unit, the invention is applicable with effect to a selectively-activated active unit other than the recording paper cassette. Also, the invention includes the method for selecting from among the recording paper containers of the communication apparatus explained in relation to the embodiment.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A communication apparatus (1) connected to a line to which a plurality of telephone numbers are assigned, for outputting ringing patterns in one-to-one correspondence to the telephone numbers, the communication apparatus (1) comprising:
memory means (28) for storing a plurality of predetermined reference ringing patterns (RB) and a plurality of active units (29) corresponding thereto;
sampling means (2) for sampling an object ringing pattern (RA) outputted at the time of ringing tone;
comparator means (2) for comparing an object ringing pattern (RA) sampled by the sampling means (2) with a plurality of reference ringing patterns (RB) stored in the memory means (28); and
selection means (21) for selectively activating an active unit (29) corresponding to the reference ringing pattern (RB) matching the object ringing pattern (RA) sampled on the basis of a result of the comparison by the comparator means (2).

2. The communication apparatus (1) of claim 1, wherein a plurality of the active units (29) are a plurality of recording paper containers (29) for individually encasing and feeding different types of recording paper for printing and recording communication information.

3. A method for selecting from among a plurality of recording paper containers (29) for individually encasing and feeding a plurality of kinds of recording paper for printing and recording communication information, in a communication apparatus (1) connected to one line to which a plurality of telephone numbers are assigned and producing ringing patterns in one-to-one correspondence with the telephone numbers, the method for selecting from among the recording paper containers (29) comprising the steps of:
sampling an object ringing pattern (RA) outputted at the time of ringing;
comparing the sampled object ringing pattern (RA) with a plurality of predetermined reference ringing patterns (RB) which are stored in one-to-one correspondence with a plurality of recording paper containers (29) ; and
activating the recording paper container (29) corresponding to the reference ringing pattern (RB) which matches the sampled object ringing pattern (RA).

4. A communication apparatus for connection to a communication line, and having a plurality of different active modes for the performance of an activity in accordance with an incoming call, the apparatus having a ringing tone analyzer for analyzing the pattern of the ringing tone of an incoming call, memory means for storing a plurality of reference ringing patterns, and control means for comparing the ringing tone analyzed by said ringing tone analyzer with said reference ringing tone patterns and for selecting a said active mode associated with the reference ringing pattern which is identified as matching the analyzed ringing tone.

5. A communication apparatus for connection to a communication line, and being capable of outputting different ringing patterns for transmission when calling another communication apparatus, the apparatus being itself responsive to an incoming call to analyze and identify the received ringing pattern, and to select one of a plurality of operating modes in accordance with the identified ringing pattern.
